# EUROPÄISCHE PATENTSCHRIFT

(11) **EP 1 505 705 B1**
(45) Veröffentlichungstag und Bekanntmachung des Hinweises auf die Patenterteilung: **23.09.2009**
(21) Anmeldenummer: 04405392.4
(22) Anmeldetag: 23.06.2004
(51) Int. Cl.: H02G 3/32

(54) **Montagevorrichtung für Kabelkanäle**
Mounting device for cable channel
Dispositif de montage pour canalisation pour cable .

(30) Priorität: 22.07.2003 CH 12822003
(43) Veröffentlichungstag der Anmeldung: 09.02.2005
(73) Patentinhaber: ZURECON AG, CH-8003 Zürich (CH)
(72) Erfinder: Pfluger, Gerd, 4625 Oberbuchsiten (CH)
(74) Vertreter: Rutz & Partner

(56) Entgegenhaltungen:
- DE-A- 3 008 510
- FR-A- 1 390 010

## Beschreibung

Die Erfindung betrifft eine Vorrichtung zur Montage, insbesondere zur Deckenaufhängung eines Kabelkanals nach dem Oberbegriff des Patentanspruchs 1.

In Gewerbe- Industrie- und Verwaltungsgebäuden werden Kabel, insbesondere Kabel für Stark- und Schwachstromnetze, infolge fehlender Eigenstabilität in Kabelkanäle hinein gelegt und so beispielsweise von einem Schaltfeld einer Zentrale zu den Verbrauchern geführt. Kabelkanäle dieser Art sind beispielsweise aus dem Produktkatalog der LANZ OENSINGEN AG, August 2001, bekannt.

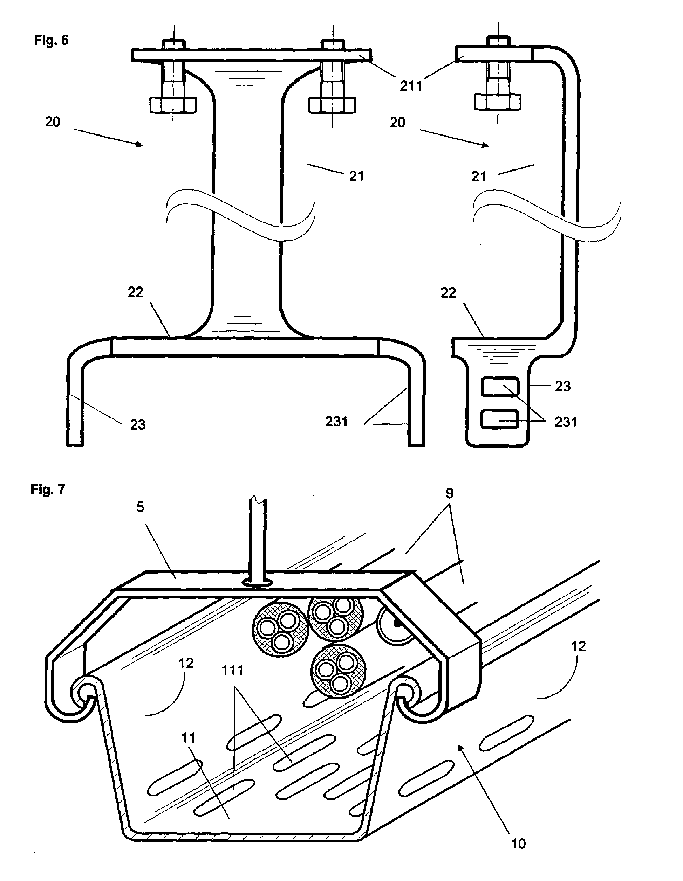

Figur 7 zeigt einen bekannten mit Längsschlitzen 111 versehenen Kabelkanal 10, welcher zwei durch ein Bodenteil 11 miteinander verbundene Seitenwände 12 aufweist. Wie in Figur 7 weiter gezeigt, werden derartige Kabelkanäle 10 oft mittels eines Bügels 5 an der Decke montiert. Ein solcher Bügel 5 behindert jedoch die Montage und Demontage der Kabel 9.

Bekannt ist ferner die Verwendung einer beispielsweise mit der Decke verschraubbaren Stütze, welche eine Bodenplatte aufweist, die von oben auf das Bodenteil 11 in den Kabelkanal 10 von Figur 7 aufgesetzt und mit einer Gegenplatte verschraubt wird, welche von unten gegen das Bodenteil 11 geführt wird. Diese Lösung erlaubt zwar das ungehinderte Einlegen der Kabel. Das Verschrauben der Bodenplatte der Stütze mit der Gegenplatte ist jedoch arbeitsintensiv und nicht ungefährlich, das diese Arbeit in der Regel auf Leitern unter der Decke ausgeführt werden muss.

Aus der FR-A-1 390 010 ist ferner eine Vorrichtung zur Montage eines mit Öffnungen versehenen Kabelkanals bekannt, die an der Decke montiert wird und ein Stützteil aufweist, das einerseits an dessen unterem Ende durch eine der Kabelkanalöffnungen hindurch führbar und arretierbar ist und das andererseits an dessen oberen Ende mit zwei Metallbändern verbunden ist, von denen jedes mit einer der Seitenwände verbunden ist. Die Montage dieser Vorrichtung gestaltet sich daher ausserordentlich aufwändig. Einerseits ist das Stützteil mit den Metallbändern zu verbinden. Andererseits sind das Stützteil und die Metallbänder mit dem Mittelteil und den Seitenteilen des Kabelkanals zu verbinden, was nur mit erheblichem Aufwand möglich ist. Dabei ist erforderlich, dass es dem Handwerker gelingt, das Stützteil durch eine passende Kabelkanalöffnung hindurch zu führen. Ferner muss der Handwerker auf eine entsprechende Höhe aufsteigen, um auf die Metallbändern zugreifen und diese mit den Seitenwänden verbinden zu können. Nachteilig ist zudem, dass bei dieser Vorrichtung ein relativ großer Abstand zur Decke erforderlich ist. Andernfalls ist eine Montage insbesondere der Metallbänder kaum möglich. Ferner ist zu beachten, dass Zugkräfte auf die Seitenwände einwirken können, welche den Kabelkanal deformieren können, falls eine schwere Last darin eingelegt ist und das Stützteil nicht passend gewählt ist. Sofern die Lochung des Stützteils nämlich nicht passend ist, so wird die gesamte Last von den Metallbändern getragen.

Der vorliegenden Erfindung liegt daher die Aufgabe zugrunde, eine verbesserte Vorrichtung zu schaffen, mittels der ein Kabelkanal an einer Decke montierbar ist.

Insbesondere sind die beiden beschriebenen Nachteile zu beseitigen und eine Montagevorrichtung zu schaffen, die rasch und sicher montierbar ist, und die das ungehinderte Einlegen der Kabel in den von der Montagevorrichtung gehaltenen Kabelkanal erlaubt.

Diese Aufgabe wird mit einer Montagevorrichtung gelöst, welche die in Anspruch 1 angegebenen Merkmale aufweist. Vorteilhafte Ausgestaltungen der Erfindung sind in weiteren Ansprüchen angegeben.

Die vorzugsweise symmetrisch ausgestaltete Montagevorrichtung weist ein an einer Decke montierbares, gegebenenfalls zweiteiliges Stützteil auf, welches zum Halten eines mit Öffnungen versehenen Kabelkanals dient. Erfindungsgemäss ist das ein- oder mehrteilige Stützteil an dem der Kabelkanal zugewandten Ende mit einem Ausleger fest verbunden, der wenigstens zwei Fangelemente aufweist, die je durch eine der im Kabelkanal vorgesehenen Öffnungen hindurch führbar und auf der anderen Seite schraubenlos mit einer Fangvorrichtung verbindbar sind, so dass der Kabelkanal, normalerweise dessen Bodenteil, zwischen Ausleger und Fangvorrichtung fest gehalten ist.

Die Fangelemente, sofern diese nicht verschiebbar gelagert sind, sind vorzugsweise symmetrisch zum Stützteil und entsprechend dem Abstand der Öffnungen im Bodenteil oder im Achsabstand der Lochungen des Kabelkanals angeordnet.

Die Fangelemente können auch als mehrfach gelochte Platten ausgebildet werden, so dass stangenförmige Fangvorrichtungen in gewünschter Höhe in die Öffnungen der Platten einschiebbar sind.

Nachdem das Stützteil an der Decke befestigt, vorzugsweise verschraubt wurde, kann der Kabelkanal gegen das Stützteil angehoben werden, bis es, nach dem Durchtreten der Fangelemente durch die Öffnungen im Kabelkanal, an den Ausleger anstösst, und die Fangvorrichtung mit den Fangelementen verbunden bzw. seitlich eingeschoben werden kann.

Die Fangvorrichtung weist vorzugsweise ein der mindestens teilweisen Aufnahme der Fangelemente dienendes Profil, gegebenenfalls ein C-Profil, oder ein zumindest annähernd rundes oder rechteckiges Vollprofil auf, welches in dazu in den Fangelementen vorgesehene Durchlässe einführbar und dort vorzugsweise arretierbar ist.

Das Verbinden der Fangvorrichtung mit den Fangelementen erfolgt daher in einfacher Weise rasch mit einem Handgriff und ohne die Verwendung von Schrauben und weiteren Verbindungsmitteln. Möglich ist ferner, jedes Fangelement mit einer einzelnen Fangvorrichtung zu verbinden.

Bei der Verwendung eines mehrteiligen, teleskopischen Stützteils, können dessen Teile vorzugsweise gegeneinander verschoben und mittels Schrauben in einer gewünschten Lage fixiert werden.

Nachfolgend wird die Erfindung anhand von Zeichnungen näher erläutert. Dabei zeigt:
- Figur 1: eine erfindungsgemässe Montagevorrichtung 20 mit einem dem Halten eines Kabelkanals 10 dienenden, zweiteiligen Stützteil 21, das einen Ausleger 22 mit Fangelementen 23 aufweist, die mit einer Fangvorrichtung 24 verbindbar sind;
- Figur 2: die Montagevorrichtung 20 von Figur 1 während der Montage der Fangvorrichtung 24;
- Figur 3: die Sicherung der Fangvorrichtung 24 gegen seitliches Verschieben mittels einer Schraube 243 und einem Nutenstein 244;
- Figur 4: eine aus zwei identischen Metallelementen geformte Montagevorrichtung 20;
- Figur 5: die Montagevorrichtung von Figur 4 mit einem höhenverstellbaren Stützteil 21;
- Figur 6: eine einstückig gefertigte, gestanzte und gebogene Montagevorrichtung 20;
- Figur 7: eine bekannte Montagevorrichtung mit einem Bügel 5; und
- Figur 8: ein Stützteil 21 mit zwei teleskopisch gegeneinander verschiebbaren und mittels eines Federelements 217 gegeneinander fixierbaren Profilteilen 215, 216.

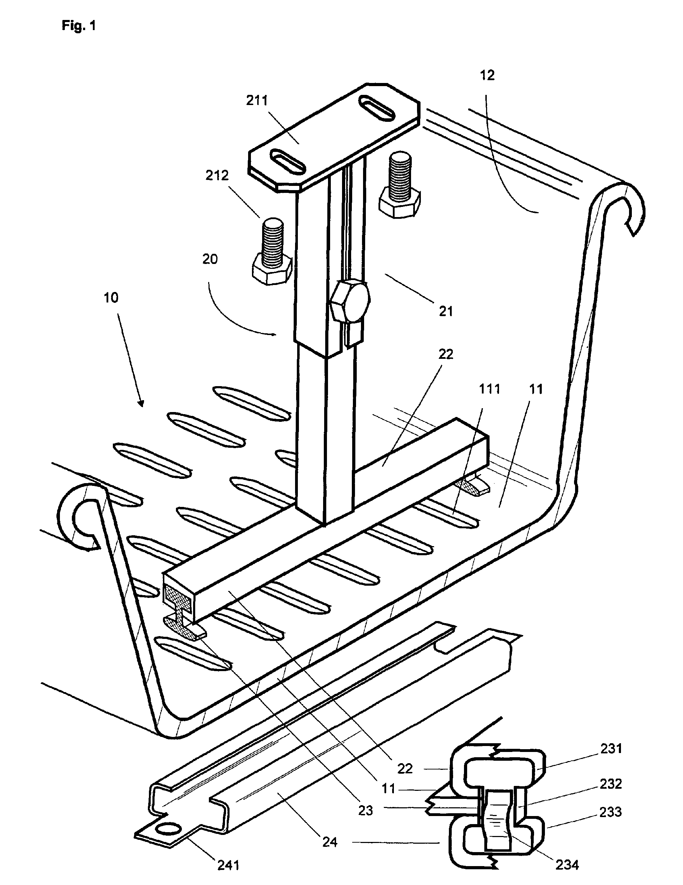

Figur 1 zeigt in einer vorzugsweisen Ausgestaltung eine erfindungsgemässe Montagevorrichtung 20 mit einem mittels eines Flanschs 211 und Schrauben 212 an einer Decke montierbaren zweiteiligen Stützteil 21, das zum Halten eines Kabelkanals 10 dient. Das in der Höhe justierbare Stützteil 22 ist an dessen Unterseite fest mit einem horizontal ausgerichteten Ausleger 22 verbunden, der ein nach unten geöffnetes C-Profil aufweist. An den Enden des Auslegers 22 sind Fangelemente 23 eingesetzt, die durch die schlitzförmigen Öffnungen 111 im Bodenteil 11 des Kabelkanals 10 hindurch führbar sind.

Gezeigt ist ferner eine C-profilförmige Fangvorrichtung 24, welche mit den Fangelementen 23 verbindbar ist, die zwei an das Innenprofil des Auslegers 22 und der Fangvorrichtung 24 angepasste Teilstücke 231 und 233 aufweisen, welche mittels eines Stegs 232 miteinander verbunden sind.

In der gezeigten Ausgestaltung sind die Fangelemente 23 ferner mit Federelementen 234 versehen, welche während des Durchstossens der Öffnungen 111 zusammengepresst werden, und anschliessend wieder expandieren und am Bodenteil 11 einrasten, so dass der Kabelkanal 10, nachdem die Fangelemente die Öffnungen 111 durchstossen haben, automatisch gehalten wird. Die Federelemente 234 erlauben eine Vormontage des Kabelkanals 10, der allerdings mittels der Fangvorrichtung 24 gesichert werden muss. Sofern die Federelemente 234 nicht vorgesehen sind, muss der Kabelkanal 10 manuell gehalten werden, bis die Fangvorrichtung 24 montiert ist.

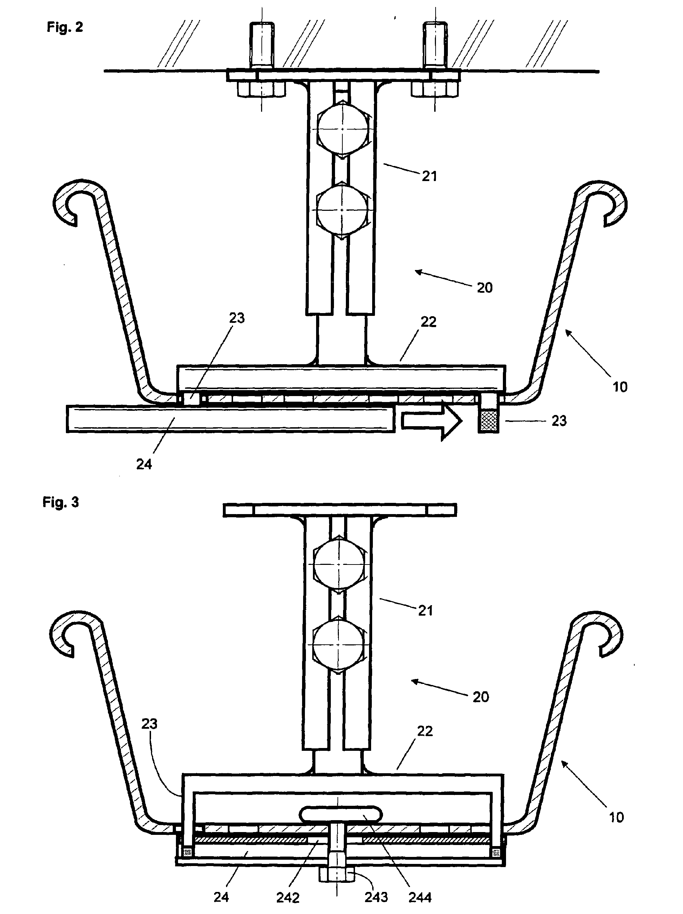

Figur 2 zeigt die mit der Decke verschraubte Montagevorrichtung 20 von Figur 1 nach dem Anheben des Kabelkanals 10 in einem ersten Montageschritt, bei dem die Fangelemente 23 durch die schlitzförmigen Öffnungen 111 im Bodenteil 11 des Kabelkanals 10 hindurchgeführt wurden.

In einem weiteren Montageschritt wird die Fangvorrichtung 24 von der Seite über die entsprechenden Teile 233 der Fangelemente 23 geführt, so dass der Kabelkanal 10 anschliessend auf die Fangvorrichtung 24 abgesenkt werden kann und von diesem getragen wird.

Zur Sicherung der montierten Fangvorrichtung 24 weist diese vorzugsweise, wie in Figur 1 gezeigt, zwei seitlich abstehende Sicherungszungen 241 auf, welche nach dem Einschieben der Fangvorrichtung 24 nach oben gebogen werden und dadurch verhindern, dass die Fangelemente 23 aus dem C-Profil wieder austreten können.

Aus Figur 1 ist ferner ersichtlich, dass die Fangelemente 23 vorzugsweise symmetrisch zum Stützteil 21 und in einem Abstand zu einander angeordnet sind, welcher dem Abstand der Öffnungen 111 im Bodenteil 11 des Kabelkanals 10 entspricht. Selbstverständlich kann der Kabelkanal 10 auch grössere Öffnungen 111 aufweisen. Möglich ist ferner, die Fangelemente 23 entlang dem Ausleger 22 verschiebbar zu lagern.

Anstelle oder zusätzlich zu den Sicherungszungen 241 kann die Fangvorrichtung 24 ferner mit einer Schraube 243 und einem Nutenstein 244 gesichert werden. Wie in Figur 3 gezeigt, weist die Fangvorrichtung 24 dazu eine Öffnung 242 auf, durch die der Nutenstein 244 mit der Schraube 243 in eine Öffnung 111 im Bodenteil 11 des Kabelkanals 10 einführbar und anschliessend festziehbar ist.

Aus Figur 1 ist ersichtlich, dass zur Herstellung der dort gezeigten Montagevorrichtung 20 der Flansch 211 und der Ausleger 22 mit dem Stützteil 21 zu verschweissen sind. Zur Vermeidung des entsprechenden Aufwands werden einzelne oder alle Teile der Montagevorrichtung vorzugsweise einstückig gefertigt, wie dies nachstehend beschrieben ist.

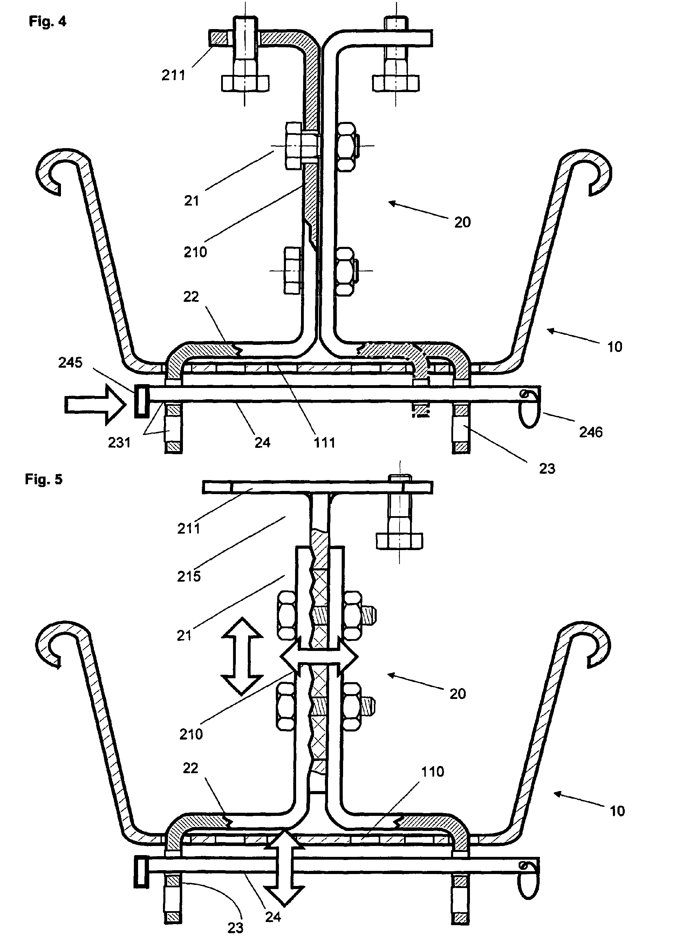

Figur 4 zeigt eine Montagevorrichtung 20 mit zwei identischen Metallelementen 210, die Rücken an Rücken, miteinander verschraubt und derart geformt, vorzugsweise gebogen sind, dass jedes der Metallelemente 210 an der Oberseite eine Hälfte des Flanschs 211 und an der Unterseite eine Hälfte des Auslegers 22 bildet. Die Enden der den Ausleger 22 bildenden Hälften sind derart nach unten gebogen, dass sie Fangelemente 23 bilden, die durch die Öffnungen 111 im Bodenteil 11 des Kabelkanals 10 hindurch führbar sind. In der gezeigten Ausgestaltung sind die Fangelemente 23 je mit zwei Durchlässen 231 versehen, durch die eine stabförmige Fangvorrichtung 24 durchschiebbar ist. Durch das Einschieben der Fangvorrichtung 24 in die unteren Durchlässe 231 kann der Kabelkanal 10 abgesenkt und durch das Einschieben der Fangvorrichtung 24 in die oberen Durchlässe 231 kann der Kabelkanal 10 angehoben und somit problemlos in der Höhe justiert werden. Zum Verhindern des Austretens der Fangvorrichtung 24 aus den Durchlässen 231 ist dieses beispielsweise mit einem Kopfstück 245 und mit einer Bohrung versehen, in welche ein Ring 246 einführbar ist. Möglich ist ferner die bereits beschriebene Verwendung von Sicherungszungen.

Figur 5 zeigt die Montagevorrichtung von Figur 4 mit einem höhenverstellbaren Stützteil 21. Zwischen den beiden Metallelementen 210, deren Unterseite durch die Teile des Auslegers 22 gebildet sind, ist ein Mittelteil 215 vorgesehen, das in verschiedenen Positionen verschraubt werden kann. Durch die Wahl der Dicke des Mittelteils 215 oder durch Einlegen von Distanzelementen kann ferner der Abstand zwischen den beiden Fangelementen 23 eingestellt werden.

Durch die Wahl identischer Metallelemente 210 für die in den Figuren 4 und 5 gezeigten Montagevorrichtungen 20 resultieren entsprechend tiefe Herstellungskosten.

Figur 6 zeigt eine einstückig gefertigte, gestanzte und gebogene Montagevorrichtung 20. Dabei wird ein Basiselement ausgestanzt und beidseitig zu dem beispielsweise dargestellten U-Profil gebogen, welches einerseits den Flansch 211 und andererseits den Ausleger 22 bildet, dessen Enden bereits vorher oder auch nachher zu den Fangelementen 23 umgeformt wurden. Die zur Durchführung der Schrauben und der Fangvorrichtung 24 dienenden Öffnungen und Durchlässe 231 werden vorzugsweise zuvor in einem Arbeitsgang ausgestanzt. Diese einstückig gefertigten Montagevorrichtungen 20 sind kostengünstig herstellbar.

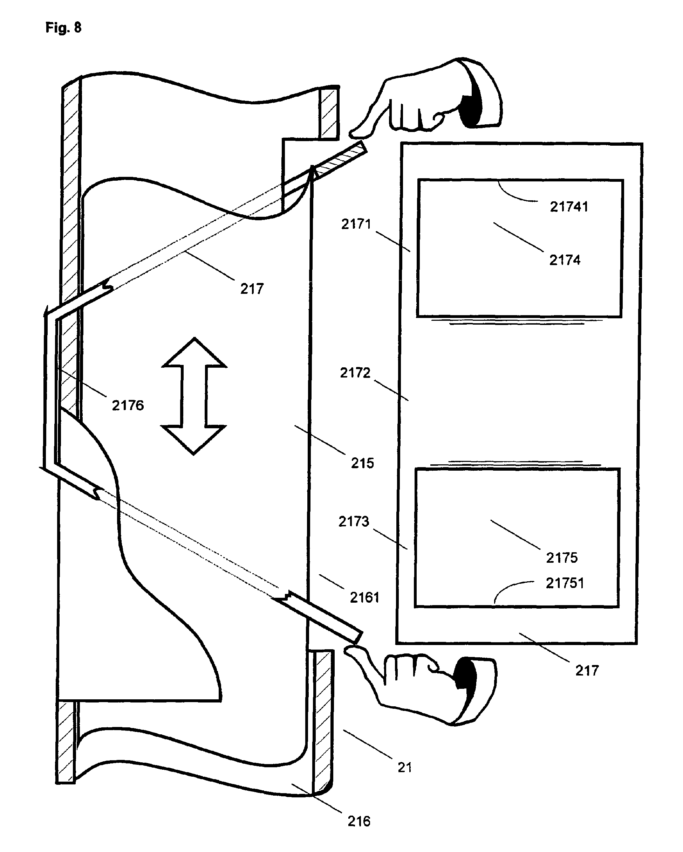

Figur 8 zeigt in einer Schnittdarstellung ein Stützteil 21 mit einem inneren und einem äusseren Profilteil 215 bzw. 216, die als Vierkantrohre ausgestaltet, teleskopisch gegeneinander verschiebbar und mittels eines Federelements 217 gegenseitig fixierbar sind. Das Federelement 217 weist ein Mittelstück 2172 auf das zwei gegeneinander gebogene Flügelteile 2171, 2173 miteinander verbindet. Die Flügelteile 2171, 2173 weisen Öffnungen 2174, 2175 je mit einem Querschnitt auf, der etwa den Aussenabmessungen des äusseren Profilteils 216 entspricht. Indem die beiden Flügelteile 2171, 2173 um 90° zum Mittelstück 2172 gegeneinander gebogen werden, gelingt es, das äussere Profilteil 216 durch die beiden Öffnungen 2174, 2175 zu schieben, bis ein Einschnitt 2161 im äusseren Profilteil 216 erreicht ist. Dort kann das Federelement 217 wieder entspannt werden, so dass die Enden der beiden Flügelteile 2171, 2173, wie in Figur 8 gezeigt, teilweise in den Einschnitt 2161 hineintreten können. In dieser Position wird das Mittelstück 2172 des Federelements 217 mittels einer Schweissverbindung 2176 mit dem äusseren Profilteil 216 fest verbunden.

Durch Gegeneinanderdrücken der beiden Flügelteile 2171, 2173 kann nun der axial sichtbare Querschnitt der Öffnungen 2174, 2175 der beiden Flügelteile 2171, 2173 wieder vergrössert werden, so dass es gelingt, das innere Profilteil 215 durch die Öffnungen 2174, 2175 hindurch zu schieben. Nach dem Loslassen der Flügelteile 2171, 2173 treten deren Endstücke daher nur noch soweit in den Einschnitt 2161 des äusseren Profilteils 216 hinein, bis die die Öffnungen 2174, 2175 begrenzenden Aussenkanten 21741, 21751 der Flügelteile 2171, 2173 an das innere Profilteil 215 auftreffen und dieses fixieren.

Das innere Profilteil 215 kann daher, nach dem manuellen Gegeneinanderdrücken der beiden Flügelteile 2171, 2173, in eine beliebige Lage verschoben und dort durch Entspannen der Flügelteile 2171, 2173 fixiert werden. Mit dieser Lösung gelingt es, die beiden Profilteile 215 und 216 teleskopisch gegeneinander zu verschieben und zu fixieren, ohne das Schrauben benötigt werden, wie dies bei dem in Figur 1 gezeigten Stützteil 21 erforderlich ist. Möglich ist ferner, insbesondere die den Aussenkanten 21741, 21751 zugewandete Aussenseite des inneren Profilteils 215 mit Rillen oder Kerben zu versehen, in die die Flügelteile 2171, 2173 einrasten können.

## Patentansprüche

1. Vorrichtung (20) zur Montage eines mit Öffnungen (111) versehenen Kabelkanals (10) mit einem an einer Decke montierbaren ein- oder mehrteiligen Stützteil (21), das an dem der Kabelkanal (10) zugewandten Ende mit dem Kabelkanal (10) verbindbar ist, **dadurch gekennzeichnet, dass** das Stützteil (21) an dem dem Kabelkanal (10) zugewandten Ende mit einem senkrecht zum Stützteil (21) verlaufenden Ausleger (22) fest verbunden ist, an dem wenigstens zwei Fangelemente (23) vorgesehen sind, die je auf einer Seite des Auslegers (22) angeordnet und je durch eine der Öffnungen (111) hindurch führbar und auf der anderen Seite schraubenlos mit einer Fangvorrichtung (24) verbindbar sind, auf der der Kabelkanal (10) anschliessend aufliegt.

2. Montagevorrichtung (20) nach Anspruch 1, **dadurch gekennzeichnet, dass** das Stützteil (21) aus zwei vorzugsweise identischen, miteinander verschraubbaren Metallelementen (210) besteht, die derart geformt, vorzugsweise gebogen sind, dass jedes Metallelement (210) eine Hälfte des Auslegers (22) mit einem an dessen Ende vorgesehenen Fangelement (23) bildet.

3. Montagevorrichtung (20) nach Anspruch 1 oder 2, **dadurch gekennzeichnet, dass** der Ausleger (22) ein der Aufnahme eines ersten Teils (231) der Fangelemente (23) dienendes Profil, gegebenenfalls ein C-Profil, aufweist oder dass der Ausleger (22) ein Vollprofil mit nach unten gebogenen Endstücken aufweist, die als Fangelemente (23) dienen.

4. Montagevorrichtung (20) nach Anspruch 1, 2 oder 3, **dadurch gekennzeichnet, dass** die Fangelemente (23) einen Durchlass (231) oder mehrere in unterschiedlichen Höhen vorgesehene Durchlässe (231) aufweisen.

5. Montagevorrichtung (20) nach einem der Ansprüche 1 bis 4, **dadurch gekennzeichnet, dass** die Fangelemente (23) je mit wenigstens einem elastischen Element (234), vorzugsweise einer Blattfeder, versehen sind, welches nach dem Durchführen durch die Öffnung (111) am Kabelkanal (10) einrastet.

6. Montagevorrichtung (20) nach einem der Ansprüche 1 bis 5, **dadurch gekennzeichnet, dass** die Fangvorrichtung (24) ein der Aufnahme eines zweiten Teils (233) der Fangelemente (23) dienendes Profil, gegebenenfalls ein C-Profil aufweist, oder dass die stabförmig ausgestaltete Fangvorrichtung (24) in die Durchlässe (231) der Fangelemente (23) einführbar ist.

7. Montagevorrichtung (20) nach einem der Ansprüche 1 bis 6, **dadurch gekennzeichnet, dass** zur Arretierung der montierten Fangvorrichtung (24),
a) die Fangvorrichtung (24) seitlich mit wenigstens einer Sicherheitszunge (241) versehen ist, die nach der Montage nach oben gebogen werden kann, so dass ein seitlicher Anschlag für die Fangelemente (23) gebildet wird; und/oder
b) die Fangvorrichtung (24) einseitig einen festen Anschlag (245) für die Fangelemente (23) aufweist; und/oder
c) die Fangvorrichtung (24) eine Öffnung (242) aufweist, durch die eine Schraube (242)und ein Nutenstein (243) durchführbar und in eine der Öffnungen (111) im Kabelkanal (10) einführbar ist.

8. Montagevorrichtung (20) nach einem der Ansprüche 1 bis 7, **dadurch gekennzeichnet, dass** die Fangelemente (23) entlang dem Ausleger (22) verschiebbar gelagert oder vorzugsweise an den Enden des Auslegers (22) befestigt sind oder dass der Ausleger (22) und die Fangelemente (23) einstückig gefertigt sind.

9. Montagevorrichtung (20) nach einem der Ansprüche 1 bis 8, **dadurch gekennzeichnet, dass** für jedes der Fangelemente (23) eine Fangvorrichtung (231) vorgesehen ist.

10. Montagevorrichtung (20) nach einem der Ansprüche 1 bis 9, **dadurch gekennzeichnet, dass** das Stützteil (21) aus zwei oder mehreren Teilen besteht, die in verschiedenen gegenseitigen Positionen miteinander verschraubbar oder mittels eines elastischen Elements (217), vorzugsweise einem Federelement, fixierbar sind.

## Claims

1. Device (20) for mounting a cable conduit (10) that is provided with openings (111) comprising a one- or two-piece supporting part (21), that can be mounted on a ceiling and that, with the end directed to the cable conduit (10), can be connected with the cable conduit (10), **characterised in that** the supporting part (21), at the end directed to the cable conduit (10), is firmly connected to a cantilever (22) that is aligned perpendicularly to the supporting part (21), on which cantilever (22) at least two catch elements are provided, each being arranged on one side of the cantilever (22), being guidable through one of the openings (111) and, on the other side, being connectable, without screws, to a catch device (24), on which the cable conduit (10) then is seated.

2. Mounting device (20) according to claim 1, **characterised in that** the supporting part (21) consists of two preferably identical metal elements (210) that can be screwed to one another and that are formed, preferably bent, in such a way, that each metal element (210) with a catch element (23) at its end presents one half of the cantilever (22)

3. Mounting device (20) according to claim 1 or 2, **characterised in that** the cantilever (22) comprises a profile, if appropriate a C-profile, serving for receiving a first piece (231) of the catch elements (23) or that the cantilever (22) comprises a solid profile with end pieces that are bent downwards and serve as catch elements (23).

4. Mounting device (20) according to claim 1, 2 or 3, **characterised in that** the catch elements (23) comprises an aperture (231) or a plurality of apertures (231) provided in different heights.

5. Mounting device (20) according to one of the claims 1 to 4, **characterised in that** the catch elements (23) are provided with at least one elastic element (234), preferably a flat spring, which latches in on the cable conduit (10) after it has been transferred through the opening (111).

6. Mounting device (20) according to one of the claims 1 to 5, **characterised in that** the catch device (24) comprises a profile, if appropriate a C-profile, serving for receiving a second piece (233) of the catch elements (23), or that the rod-shaped catch device (24) is insertable into the apertures (231) of the catch elements (23).

7. Mounting device (20) according to one of the claims 1 to 6, **characterised in that** for locking the installed catch device (24),
a) the catch device (24) being provided on one side with a security tongue (241), which can be bent upwards after the installation, so that a lateral arrester for the catch elements (23) is provided; and/or
b) the catch device (24) comprising on one side a firm arrester (245) for the catch elements (23); and/or
c) the catch device (24) comprising an opening (242), through which a screw (242) and a slot-nut (243) are transferable and insertable into one of the openings (111) in the cable conduit (10).

8. Mounting device (20) according to one of the claims 1 to 7, **characterised in that** the catch elements (23) are slideably supported along the cantilever (22) or, preferably affixed at the ends of the cantilever (22) or that the cantilever (22) and the catch elements (23) are produced as one piece.

9. Mounting device (20) according to one of the claims 1 to 8, **characterised in that** a catch device (231) is provided for each catch element (23).

10. Mounting device (20) according to one of the claims 1 to 9, **characterised in that** the supporting part (21) consists of two ore more parts, which can be screwed or fixed to one another in different mutual positions by means of elastic elements (217), preferably spring elements.

## Revendications

1. Dispositif (20) pour le montage au plafond d'un canal de câbles (10) munis d'ouvertures (111) avec une partie de support (21) à une ou plusieurs parties, qui est reliée sur l'extrémité tournée vers le canal de câble (10) au canal de canal (10), **caractérisé en ce que** la partie de support (21) est reliée fixement à un cantilever (22) s'étendant perpendiculairement à la partie de support (21) sur l'extrémité tournée vers le canal de câble (10), cantilever, sur lequel il est au moins prévu au moins deux éléments d'interception (23) qui sont disposés respectivement sur un côté du cantilever (22) et sont guidables à travers l'une des ouvertures (111) et sont reliés de l'autre côté sans vis avec un dispositif d'interception (24), sur lequel s'applique ensuite le canal de câbles (10).

2. Dispositif de montage (20) selon la revendication 1, **caractérisé en ce que** la partie de support (21) se compose de deux éléments métalliques (210) de préférence identiques vissables l'un à l'autre qui sont formés de préférence cintrés de sorte que chaque élément métallique (210) forme une moitié du cantilever (22) avec un élément d'interception (23) prévu sur son extrémité.

3. Dispositif de montage (20) selon la revendication 1 ou 2, **caractérisé en ce que** le cantilever (22) présente un profilé servant au logement d'une première partie (231) des éléments d'interception (23) éventuellement un profilé en C ou **en ce que** le cantilever présente un profilé plein avec des extrémités courbées vers le bas servant d'éléments d'interception(23).

4. Dispositif de montage (20) selon la revendication 1, 2 ou 3, **caractérisé en ce que** les éléments d'interception (23) présente un passage (231) ou plusieurs passages (231) prévus à différentes hauteurs (231).

5. Dispositif de montage selon l'une des revendications 1 à 4, **caractérisé en ce que** les éléments d'interceptions (23) sont munis respectivement munis d'au moins un élément élastique (234) de préférence un ressort à lames qui s'encliquète après la traversée à travers l'ouverture (111) sur le canal de câbles (10).

6. Dispositif de montage (20) selon l'une des revendications 1 à 5, **caractérisé en ce que** le dispositif d'interception (24) présente un profil servant à la réception d'une seconde partie (233) des éléments d'interception (23), éventuellement un profilé en C ou **en ce que** le dispositif d'interception en forme de barre (24) est insérable dans les passages (231) des éléments d'interception (23).

7. Dispositif de montage (20) selon l'une des revendications 1 à 6, **caractérisé en ce que** pour le blocage du dispositif d'interception monté (24),
a) le dispositif d'interception (24) est muni latéralement d'au moins une languette de sécurité (241) qui peut être cintrée vers le haut après le montage de sorte qu'une butée latérale est formée pour les éléments d'interception (23) et/ou,
b) le dispositif d'interception présente sur un côté une butée fixe (245) pour les éléments d'interception (23) et/ou
c) le dispositif d'interception (24) présente une ouverture (242) à travers laquelle une vis (242) et une languette écrou (243) peuvent être guidées et insérés dans l'une des ouvertures (111) dans le canal de câbles (10).

8. Dispositif de montage (20) selon l'une des revendications 1 à 7, **caractérisé en ce que** les éléments d'interception (23) sont logés coulissants le long du cantilever (22) ou sont de préférence fixés aux extrémités du cantilever (22) ou **en ce que** le cantilever (22) et les éléments d'interception (23) sont fabriqués en une seule pièce.

9. Dispositif de montage (20) selon l'une des revendications 1 à 8, **caractérisé en ce que** pour chacun des éléments d'interception (23), il est prévu un dispositif d'interception (231).

10. Dispositif de montage (20) selon l'une des revendications 1 à 9, **caractérisé en ce que** la partie de support (21) se compose de deux ou de plusieurs parties qui peuvent être vissées ensemble dans différentes positions opposées ou sont fixables au moyen d'un élément élastique (217) de préférence un élément ressort.
